# EUROPÄISCHE PATENTSCHRIFT

(11) **EP 2 828 352 B1**
(45) Veröffentlichungstag und Bekanntmachung des Hinweises auf die Patenterteilung: **31.08.2016**
(21) Anmeldenummer: 13710811.4
(22) Anmeldetag: 08.03.2013
(51) Int. Cl.: C09K 11/80, F21S 8/10

(54) **WEISSLICHTBELEUCHTUNGSVORRICHTUNG**
WHITE LIGHT ILLUMINATION DEVICE
DISPOSITIF D'ÉCLAIRAGE À LUMIÈRE BLANCHE

(30) Priorität: 22.03.2012 DE 102012005657; 22.03.2012 US 201261614067 P
(43) Veröffentlichungstag der Anmeldung: 28.01.2015
(73) Patentinhaber: SCHOTT AG, 55122 Mainz (DE)
(72) Erfinder: HAGEMANN, Volker, 55270 Klein-Winternheim (DE); WÖLFING, Bernd, 55122 Mainz (DE)
(74) Vertreter: Blumbach Zinngrebe
(86) Internationale Anmeldenummer: PCT/EP2013/054706
(87) Internationale Veröffentlichungsnummer: WO 2013/139619

(56) Entgegenhaltungen:
- US-A- 5 813 752
- US-A1- 2005 269 582
- US-A1- 2009 236 619
- US-A1- 2011 157 865
- JEONG ROK OH ET AL: "Lowering Color Temperature of Y[sub 3]Al[sub 5]O[sub 12]:Ce[sup 3+] White Light Emitting Diodes Using Reddish Light-Recycling Filter", ELECTROCHEMICAL AND SOLID-STATE LETTERS, Bd. 13, Nr. 1, 4. November 2009 (2009-11-04), Seite J5, XP055065621, ISSN: 1099-0062, DOI: 10.1149/1.3253619
- SANG-HWAN CHO ET AL: "<title>Efficiency enhancement in white phosphor-on-cup light-emitting diodes using short wave-pass filters</title>", PROCEEDINGS OF SPIE, Bd. 7617, 8. Februar 2010 (2010-02-08), Seiten 76171R-76171R-9, XP055065620, ISSN: 0277-786X, DOI: 10.1117/12.843034

## Beschreibung

### Gebiet der Erfindung

Die Erfindung bezieht sich auf eine zur Erzeugung von weißem Licht betreibbare Beleuchtungsvorrichtung, die eine Anregungslichtquelle und einen Fluoreszenzkonverter umfasst.

### Stand der Technik

Beleuchtungsvorrichtungen, die mit einer Anregungslichtquelle und einem Fluoreszenzkonverter (im Nachfolgenden kurz Konverter genannt) arbeiten, sind vielfältig bekannt (WO 2007/105647 A1, JP 2009-105125, US 7,654,712 B2, US 2007/1893521, US 7,758,224 B2, US 7,433,115 B2, US 7,356,054 B2, DE 102 010 028 949, US 7,800,287, US 7,402,840). Als Anregungslichtquelle zur Erzeugung von blauem Licht sind Halbleiter, beispielsweise die Laserdiode, bekannt. Es sind auch Konverter bekannt, die blaues Licht in gelbes Licht konvertieren, derart, dass ein weißer Farbort im Farbraum des Farbort-Diagramms erreicht werden kann. Solche zur direkten Weißlichterzeugung geeigneten Konverter, wie z.B. (Y,Gd)AG-Konverter, haben jedoch anderweitige Nachteile, insbesondere eine Anfälligkeit für sogenanntes thermisches Quenching, also die Abnahme der Konversionseffizienz bei erhöhter Temperatur des Konverters. Andererseits kann man mit temperaturstabilen Konvertern, wie z.B. niedrig dotiertem, reinem Ce-YAG den Weißpunkt nur näherungsweise erreichen.

Aus Jeong Rok Oh et.al: "Lowering color temperature of Y3Al5O12: Ce3+ white light emitting diodes using reddish light-recycling filter" in Electrochemical and Solid-State Letters, Bd. 13, No. 1, November 04, 2009, Seite J5 und Sang-Hwan Cho et.al: "Efficiency enhancement in white phosphor-on-cup light-emitting diodes using short wave-pass filters", Proceedings of SPIE, Bd. 7617, 08. Februar 2010, S. 76171R-1 bis 76171R-9 sowie US 2009/0235519 A1, US 5,813,752 und US 2005/0269582 A1 sind Beleuchtungseinrichtungen mit LEDs und Konverter bekannt, bei denen durch Reflexion des gelben Konverterlichtes an einem Kurzpassfilter das abgegebene Weißlicht verstärkt wird und auch "wärmer" gemacht werden kann.

Aus US 2011/0157865 A1 ist bekannt, dass Konverter im Brennpunkt von Parabolspiegel sehr heiß werden, wenn sie von Laserlicht beaufschlagt werden.

### Allgemeine Beschreibung der Erfindung

Der Erfindung liegt die Aufgabe zugrunde, eine Beleuchtungseinrichtung zur Erzeugung von weißem Licht zu schaffen, das das für Auto-Scheinwerfer relevante Spezifikationsfenster der ECE-Norm erreicht.

Gemäß der Erfindung wird eine Weißlicht-Beleuchtungsvorrichtung mit sehr hoher Leuchtdichte in der Nähe des Weißpunktes geschaffen, basierend auf einer Anregungslichtquelle für blaues Licht und einem Fluoreszenzkonverter, der das blaue Licht mit hoher Effizienz in gelbes Licht konvertiert. Der grüne Lichtanteil im konvertierten, gelben Licht wird so gefiltert, dass das für den Auto-Scheinwerfer relevante Spezifikationsfenster der ECE-Norm erreicht wird.

Als Anregungslichtquelle kann jede Halbleiter-basierte Lichtquelle mit sehr hoher Strahldichte verwendet werden, beispielsweise Laserdioden. Die Emissionswellenlänge der Lichtquelle liegt innerhalb des Anregungsbandes des Konvertermaterials.

Der zu verwendende Konverter hat bei erhöhten Betriebstemperaturen eine ausreichende Konversionseffizienz und ermöglicht die Umwandlung von blauem in gelbes Licht an einem Weißpunkt-nahen Farbort im Farbort-Diagramm. Vorzugsweise wird eine niedrig dotierte, reine Ce-YAG Keramik verwendet. Als niedrig dotiert kann ein Bereich zwischen 0.02 und 0.2 Gewichtsprozent CeO2 gelten. Gegebenenfalls kann auch ein anderer temperaturstabiler Konverter verwendet werden. Dieses Material ermöglicht eine effiziente Lichtkonversion in gelbes Licht mit einer Quanteneffizienz von mehr als 70% auch bei hohen Betriebstemperaturen im Bereich von 200°C bis 250°C.

Die erhöhte Betriebstemperatur ergibt sich aus der Umgebungstemperatur und dem Wärmeeintrag durch das absorbierte Anregungslicht. Jedoch ergibt die Mischung des blauen Anregungslichtes mit dem konvertierten gelben Licht kein ausreichend weißes Licht. Gemäß Erfindung wird jedoch ein Filter zur Schwächung des grünen Lichtanteils unterhalb von 530 nm in dem vom Konverter abgegebenen Licht angewendet, das in Folge der Filterung zu weißem Beleuchtungslicht wird.

Das Herausfiltern des grünen Teilspektrums aus dem Emissionsspektrum des Konverters führt zwar zu einer Verringerung der Effizienz der Konversion, jedoch kann die Effizienz im Vergleich zu Konvertern nach dem Stand der Technik trotzdem bei der Erfindung höher sein, weil niedrig dotiertes, reines Ce-YAG Material in keramischer Form bei relativ hohen Temperaturen betrieben werden kann, und trotzdem eine hohe Lichtausbeute erzielt werden kann. Hohe Temperaturen können einmal durch hohe Umgebungstemperaturen bedingt sein. Sie können aber auch Folge einer hohen Bestrahlungsstärke des anregenden Lichts sein, welche für die Erreichung hoher Leuchtdichten notwendig ist. Konverter nach dem Stand der Technik, die direkt im Weißpunkt-Bereich des Farbort-Diagramms betrieben werden, können für gute Konversionseffizienz nur bei relativ niedriger Temperatur betrieben werden. Dies gilt insbesondere für (Y,Gd)AG - Konverter, bei denen ein Teil des Yttriums durch Gadolinium ersetzt wird, um das Emisssionspektrum zu längeren Wellenlängen hin zu verschieben (V.M. Bachmann, Dissertation 2007, Universität Utrecht).

Die erfindungsgemäße Weißlichtbeleuchtungsvorrichtung kann in verschiedenen Sparten verwirklicht werden, darunter in Transmissionskonfiguration, in Remissionskonfiguration und mit externer spektraler Filterung. In jeder Sparte können unterschiedliche Ausführungsformen implementiert werden.

Eine erste Ausführungsform arbeitet in Transmissionskonfiguration mit rückseitigem Filter. Bei dieser Ausführungsform weist der Konverter auf der Seite zur Anregungslichtquelle hin einen Kurzpassfilter auf, der vorzugsweise als dichroitischer Reflektor ausgebildet ist. Ein solcher Kurzpassfilter hat auf der Lichteintrittsseite eine maximale Transmission für blaues Licht und lässt vom Konverter her rückwärts eintreffendes kurzwelliges Licht passieren, während der langwellige Teil des konvertierten Lichts am Kurzpassfilter weitgehend reflektiert wird. In der Transmissionskonfiguration wird ein resultierendes weißes Emissionsspektrum aus blauem Anregungslicht und aus direkt konvertiertem Anregungslicht sowie nach Reflektion am Kurzpassfilter aus remittiertem Licht erhalten. Der Konverter kann 10% bis 30% des blauen Anregungslichts transmittieren, wobei das absorbierte Anregungslicht zu einem großen Teil in gelbes Licht konvertiert wird. Der Filter filtert von diesem gelben Licht einen grünen Lichtanteil weg, um insgesamt einen Farbort im Weißbereich des Spektraldiagramms zu erzielen.

In einer zweiten Ausführungsform weist der Konverter auf der Seite zur Anregungslichtquelle hin eine selektive Metallspiegelblende auf, durch deren Loch das Anregungslicht in den Konverter eintritt. Der Metallspiegel lässt vom Konverter her rückwärts eintreffendes kurzwelliges Licht selektiv passieren, während das konvertierte, langwellige Licht am selektiven Metallspiegel reflektiert wird. In der Transmissionskonfiguration wird so ein resultierendes weißes Emissionsspektrum aus blauem Anregungslicht, direkt konvertiertem Licht des Anregungslichtes sowie nach Reflektion am selektiven Metallspiegel aus remittiertem Licht erhalten.

Die dritte Ausführungsform stellt eine Variante zur zweiten Ausführungsform dar. Der Konverter weist wiederum auf der Seite zur Anregungslichtquelle hin, eine Metallspiegelblende auf, durch deren Loch das Anregungslicht in den Konverter eintritt. Der Konverter tranmittiert 10% bis 30% des blauen Anregungslichts. Das absorbierte Anregungslicht wird zu einem großen Teil in gelbes Licht konvertiert. Der Filter zur Schwächung des grünen Lichtanteils ist auf der Austrittsseite der Beleuchtungseinrichtung angeordnet, um so in der Transmissionskonfiguration ein resultierendes weißes Emissionsspektrum zu erhalten.

Die vierte Ausführungsform bedient sich der Remissionskonfiguration und zu diesem Zweck weist der Konverter auf der von der Anregungslichtquelle abgewandten Seite einen breitbandig reflektierenden Spiegel auf. Auf der Seite des Konverters zur Anregungslichtquelle hin ist ein Stoppband-Filter vorgesehen, der bei der blauen Anregungslichtwellenlänge und bei längeren, gelb-roten Emissionswellenlängen Reflex mindernd wirkt und damit die Auskopplung von Licht aus dem Konverter relativ zu den mittleren, grün-gelben Spektralanteilen in der Remissionskonfiguration begünstigt. Das reflektierend gestreute austretende blaue Licht mischt sich mit dem konvertierten gelben Licht, das in Folge des Stoppband-Filters an mittleren, grün-gelben Spektralanteilen verloren hat, so dass die Lichtmischung weißes Licht ergibt.

Die fünfte Ausführungsform stellt eine Variante zur vierten Ausführungsform dar. Der Konverter weist auf der Seite zur Anregungslichtquelle hin einen anpassbaren Bandstoppfilter auf, um Anregungslicht hindurchzulassen, jedoch in dem Konverter erzeugtes Licht mit mäßig kurzen Emissionswellenlängen in den Konverter zurückzureflektieren. Auf der von der Anregungslichtquelle abgewandten Seite des Konverters ist wiederum ein breitbandig reflektierender Spiegel vorgesehen, um das auftreffende Licht teilweise der Absorbierung bzw. der Reabsorbierung im Konverter zuzuführen, oder im Bereich des Durchlassbandes des Filters aus dem Konverter austreten zu lassen, um mit Mischung mit dem Blauanteil ein weißes Beleuchtungslicht zu ergeben.

Bei einer sechsten Ausführungsform ist der Konverter auf der von der Anregungslichtquelle abgewandten Seite mit einem Kurzpassfilter versehen, der mittels eines wärmeleitfähigen Klebers mit einer plattenförmigen Wärmesenke verbunden ist und zusammen mit diesen Elementen einen effektiven Spiegel ergibt. Das in dem Konverter erzeugte langwellige Licht wird weitgehend reflektiert, während kurzwelliges grünes Licht durch den Kurzpassfilter in die Klebeschicht gelangt, wo sie weitgehend absorbiert wird und die sich dabei entwickelnde Wärme von dem wärmeleitfähigen Kleber in die plattenförmige Wärmesenke abgeleitet wird. Insgesamt liegt eine Remissionskonfiguration vor, bei der das austretende Licht insgesamt einen Farbort im Weißbereich des Spektraldiagramms einnimmt.

Bei den zuvor beschriebenen Ausführungsbeispielen erfolgte die Formung des Weißspektrums durch Filter direkt am Konverter. Stattdessen ist aber auch möglich, die Filterung in einem optischen System vorzunehmen, welche das Beleuchtungslicht auf seine Bestimmungsstelle hin lenkt. Der Filter kann ein dichroitischer Reflexionsspiegel mit einem grün-Durchlassband im Bereich von 480 bis 520 nm darstellen, der mangels Reflexion dieses Grünanteils den Grünanteil des vom Konverter abgegebenen Lichtes abreichert.

Weitere Einzelheiten der Erfindung ergeben sich aus den nachfolgenden Ausführungsbeispielen, die anhand der Zeichnungen beschrieben werden, und den Ansprüchen.

### Kurzbeschreibung der Zeichnungen

Es zeigen:
- Fig. 1: das Farbort-Diagramm,
- Fig. 2: eine Spektralverteilung vor und nach Filterung,
- Fig. 3: eine erste Ausführungsform einer Beleuchtungsvorrichtung,
- Fig. 4: eine zweite Ausführungsform der Beleuchtungsvorrichtung,
- Fig. 5: eine dritte Ausführungsform Beleuchtungsvorrichtung,
- Fig. 6: eine vierte Ausführungsform der Beleuchtungsvorrichtung,
- Fig. 7: eine fünfte Ausführungsform der Beleuchtungsvorrichtung.

### Beschreibung der Ausführungsbeispiele

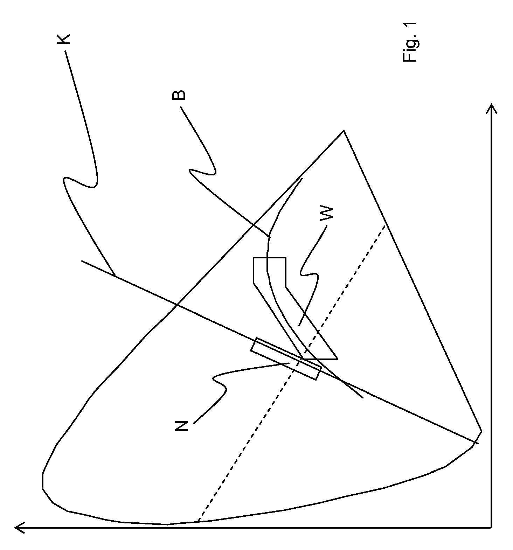

Fig. 1 zeigt das bekannte Farbort-Diagramm begrenzt durch die gebogene Spektralfarblinie und die schräg verlaufende Purpurlinie. In das Diagramm eingezeichnet ist die Schwarzkörperkurve B, die durch den Weißbereich W hindurchführt. Eingezeichnet ist ferner die Konversionslinie K für einen Ce-YAG Konverter für die Konversion von blauem Anregungslicht in gelbes konvertiertes Licht. Die Konversionslinie beginnt bei etwa 430 nm und endet bei etwa 565 nm. Der gelbe Lichtanteil nimmt fortschreitend von links nach rechts in der Konversionslinie zu. Die Konversionslinie schneidet einen Nahe-Weißbereich N, den man im praktischen Betrieb wegen auftretender Toleranzabweichungen mit dem Ce-YAG Konverter erreichen kann. Beim Betrieb in diesem Nahbereich N wird ein grün-gelblich-weißes Lichtspektrum erzielt.

Um in den weißen Spektralbereich W zu gelangen, wird das im Bereich N gewonnene Licht in der Weise gefiltert, dass der grüne Lichtanteil unterhalb von 530 nm abgeschwächt wird. Das so erhaltene Beleuchtungslicht ist im weißen Spektralbereich W angesiedelt und kann zur Allgemeinbeleuchtung, aber auch im Scheinwerfer, z.B. von Autos, genutzt werden.

Als Material des Konverters wird niedrig dotiertes, reines Ce-YAG Material mit einem Gehalt von CeO2 in einem Bereich von 0.02 bis 0.2 Gewichtsprozent verwendet, und zwar vorzugsweise als Keramik. Keramik ist selbsttragend und ermöglicht die direkte Applikation von Filtermaterial, auch bei hohen Temperaturen. Zudem kann ein keramischer Konverter bei relativ hohen Temperaturen betrieben werden und die Wärmeableitung ist ausreichend gut.

Der Konverter kann zu Zwecken der Erfindung auch aus anderem Konvertermaterial als reinem Ce-YAG aufgebaut sein, welches bei erhöhten Betriebstemperaturen eine Konversionseffizienz ähnlich dem reinen Ce-YAG aufweist. In Betracht kommen folgende Materialien: Ce-LuAG, Ce-TAG und weitere Granate.

Bei maximal auftretenden Betriebstemperatur unterhalb von 200°C kann auch Ce-(Y,Gd)AG mit einem geringen Gd/Y-Verhältnis <0.1 bei der erfindungsgemäßen Beleuchtungsvorrichtung verwendet werden.

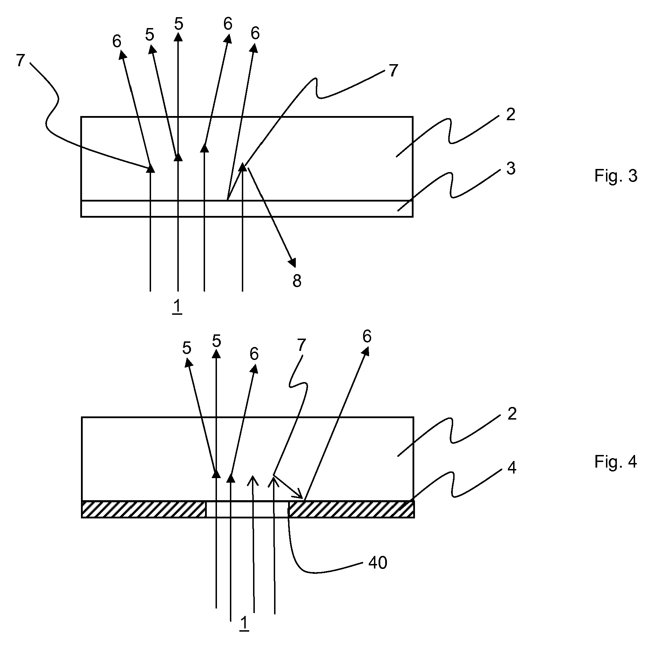

Fig. 3 zeigt eine Beleuchtungseinrichtung in Transmissionskonfiguration in schematischer Darstellung. Eine Anregungslichtquelle 1, beispielsweise eine Laserdiode, sendet blaues Licht auf die Rückseite eines Konverters 2, dessen Rückseite mit einem Kurzpassfilter 3 versehen ist. Der Kurzpassfilter kann ein dichroitischer Reflektor sein, der auf der Eintrittsseite maximale Transmission für blaues Licht aufweist. Solches blaue Licht gelangt somit in den Konverter 2, wo das Licht konvertiert oder nicht konvertiert wird. Nicht konvertiertes Licht ist als Pfeil 5 und konvertiertes Licht als Pfeil 6 angedeutet. Eine Konversionsstelle ist bei 7 angedeutet. Konvertiertes Licht breitet sich nach allen Richtungen im Konverter 2 aus, also auch rückwärts. Der Filter 3 hat eine Filterkante bei 530 nm. Konvertiertes langwelliges Licht, das man als grün bezeichnen kann, wird deshalb durch den Filter 3 hindurchgelassen, wie durch Pfeil 8 angedeutet, während gelb-rotes Licht an dem Filter reflektiert wird, wie durch einen weiteren Pfeil 6 angedeutet. Deshalb wird solches reflektiertes remittiertes Licht mit weniger Grünanteil sich mit dem direkt remittierten Licht und dem nicht konvertierten Licht im Beleuchtungslicht mischen und insgesamt Weißlicht ergeben.

### Beispiel:

Es sei angenommen, dass der Konverter 2 eine Blautransmission von 20% und eine Absorptionsrate von 80% aufweist. Von diesen 80% des Lichts werden 72% in gelbes Licht konvertiert, der Rest in Wärme umgewandelt.

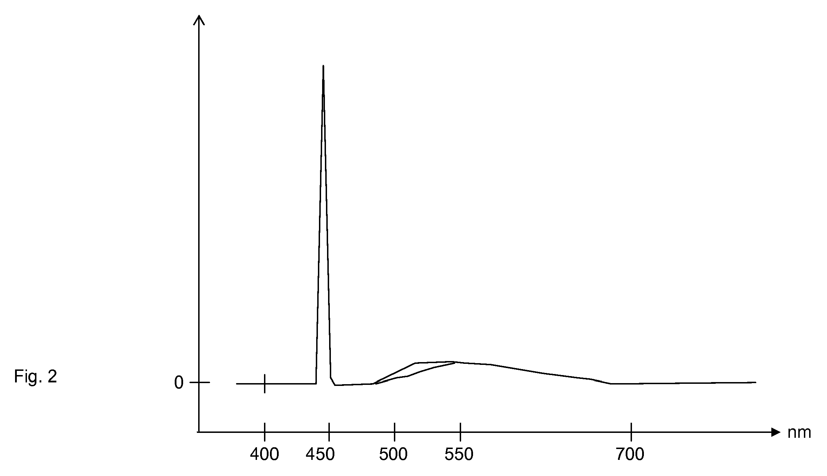

Fig. 2 zeigt die spektrale Verteilung des so erhaltenen Lichtes. Es ist ein schmaler Spektralbereich für das blaue Licht und ein breiter Spektralbereich für das gelb-grüne Licht vorhanden. Nach Filterung wird das linke Ende des breiten gelben Spektralbereichs weggefiltert, so dass die Lichtanteile von blau und gelb insgesamt Weißlicht ergeben. Der Leistungsverlust im Vergleich zum ungefilterten Spektrum beträgt 11%.

Fig. 4 zeigt eine Ausführungsform der Beleuchtungsvorrichtung in Transmissionskonfiguration mit rückseitiger Metallspiegelblende aus Metallspiegel 4 und Loch 40. Durch das Loch 40 eindringendes blaues Licht 1 wird teilweise durchgelassen, teilweise in gelbes Licht (Pfeil 6) konvertiert (Konversionsstelle 7). Das konvertierte Licht breitet sich auch nach der Rückseite aus und wird dann am Metallspiegel 4 reflektiert. Ein Goldspiegel hat die erwünschte Eigenschaft der spektralen Selektivität, d.h. das relativ langwelligere rot-gelbe Licht wird nach vorne in Beleuchtungsrichtung reflektiert, während das kurzwelligere grün-gelbe Licht durch den spektral selektiven Metallspiegel absorbiert wird, wodurch das remittierte Licht an kurzwelligen, grünen Spektralanteilen abgereichert wird.

Die Ausführungsform nach Fig. 4 kann dahingehend abgewandelt werden, dass auf der Forderseite des Konverters 2 ein Filter aufgebracht wird, der den grünen Spektralanteil des emittierten Lichtes in Beleuchtungsrichtung abschwächt. In diesem Fall braucht der Metallspiegel 4 nicht spektral selektiv ausgebildet werden.

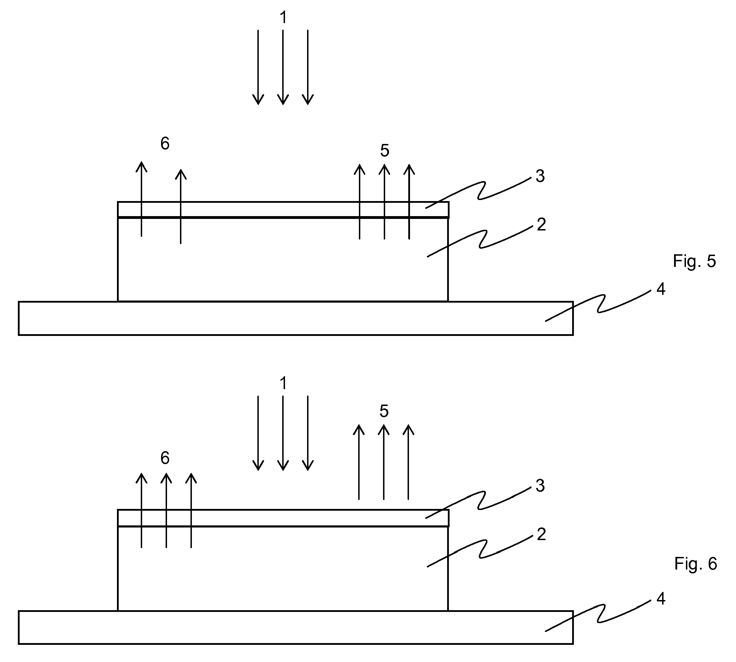

Fig. 5 zeigt eine Beleuchtungseinrichtung in Remissionskonfiguration mit frontseitiger Beschichtung. Auf der Unterseite des Konverters 2 ist ein breitbandig reflektierender Spiegel 4, vorzugsweise Metallspiegel, aufgebracht, der noch nicht im Konverter absorbiertes Anregungslicht 1 und konvertiertes Licht 6 reflektiert. Auf der Oberseite des Konverters 2 ist ein Bandstoppfilter 3 angebracht, der gestreutes Anregungslicht 5 und auch das konvertierte Licht 6 mit Ausnahme zwischen den Wellenlängen 480 nm und 510 nm hindurch lässt. Somit wird der grüne Spektralbereich zwischen 480 nm und 510 nm im Emissionslicht unterdrückt. Es sei jedoch bemerkt, dass die kurzen Emissionswellenlängen zwischen 480 nm und 510 nm an dem Filter 3 und auch an dem Spiegel 4 reflektiert werden, so dass die Möglichkeit besteht, dass solches Licht reabsorbiert und bei längeren Nutzwellenlängen reemittiert wird. Die Effizienzeinbuße durch den Bandstoppfilter 3 fällt somit geringer aus.

Fig. 6 zeigt ein weiteres Ausführungsbeispiel einer Beleuchtungsvorrichtung in Remissionskonfiguration mit frontseitiger Beschichtung. Der Filter 3 wird durch eine Antireflexionsbeschichtung gebildet, die eine spektrale Beeinflussung des ein- und austretenden Lichtes bewirkt.

Die Durchlass-Sperr-Bereiche des Filters haben gewissermaßen eine W-Form. Bei der Anregungswellenlänge blau und bei längeren Emissionswellenlängen gelb-rot wirkt der Antireflexionsbelag 3 Reflex mindernd und begünstigt damit die Auskopplung relativ zu den mittleren Spektralanteilen grün-gelb. Das konvertierte Licht 6 wird somit beim Austritt aus der Vorrichtung an grün-gelben Spektralanteilen abgereichert, um mit dem gestreuten und zur Austrittsseite reflektierten Anregungslicht 5 ein weißes Farbspektrum zu ergeben.

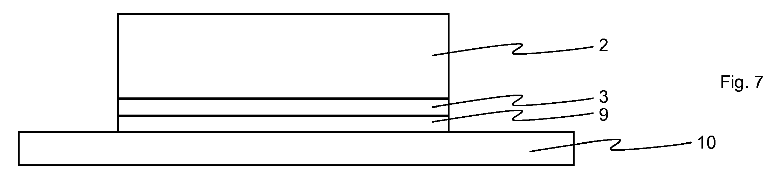

Fig. 7 zeigt eine Beleuchtungseinrichtung in Remissionskonfiguration mit rückseitiger Beschichtung. Diese Beschichtung 3 besteht aus einem breitbandigen Reflektor, der entweder aus einer metallischen oder dielektrischen Beschichtung bestehen kann. Das Reflexionsband erfasst dabei vornehmlich den langwelligen Bereich des konvertierten Lichts. Der Konverter 2 samt breitbandigem Reflektor 3 ist mittels eines gut wärmeleitfähigen Klebers 9 auf eine Wärmesenke 10 geklebt, die aus Aluminium oder Kupfer bestehen kann und keine optische Politur aufweist. Das System aus breitbandiger Spiegelbeschichtung, Wärmeleitkleber und Wärmesenke wirkt als ein effektiver Spiegel, bei dem das Spiegelreflexionsspektrum darauf abgestimmt ist, was als Nutzlicht reflektiert und was als Abfalllicht beseitigt werden soll.
Der Kleber für die Anbindung des Konverters an die Wärmesenke braucht keine besonders gute Transparenz aufweisen und kann im Gegenteil sogar absorbierend gestaltet sein. Es wird ein Wärmeleitkleber mit Füllstoff bevorzugt, der einen besonders guten thermischen Kontakt zwischen den Nachbarschichten herstellt. Als Wärmesenke kann Aluminium oder Kupfer verwendet werden, die keine optische Politur aufweisen müssen.

Der Konverter 2 ist dafür ausgelegt, blaues Anregungslicht zurückzustreuen bzw. zu reflektieren. Falls noch ein Teil des blauen Anregungslichtes bis zum breitbandigen Spiegel 3 gelangt, wird dieser so ausgelegt, dass er zusätzlich eine möglichst hohe Blaureflexion sicherstellt. Somit besteht zwischen dem blauen und langwelligen Reflexionsbereich ein nicht spiegelnder Bereich. Das aus dem Konverter austretende Licht setzt sich somit aus blauen Lichtanteilen des Anregungslichtes und aus gelbem konvertiertem Licht zusammen, dessen grüner Spektralanteil durch die Wirkung des Filters 3 verringert worden ist. Das abgegebene Beleuchtungslicht wird deshalb als Weißlicht empfunden.

Als Variante der Verbindung von Konverter und Wärmesenke über einen Wärmeleitkleber kann auch eine Lötverbindung zwischen Konverter und Wärmesenke angewendet werden. Dies ist vor allem bei einer metallischen Spiegel-Beschichtung einsetzbar.

Die beschriebenen Ausführungsformen können abgewandelt werden. So ist es möglich, den Bandstoppfilter nicht direkt am Konverter anzubringen, sondern in einem nachgelagerten optischen System anzuordnen. Die Filterung kann auch über einen dichroitischen Reflektorspiegel erfolgen, der den grünen spektralen Anteil zwischen 480 und 520 nm passieren lässt, so dass das reflektierte Licht hinsichtlich dieses Grünanteils abgereichert ist. Eine weitere Möglichkeit besteht darin, einen Grünabsorber in das Austrittsfenster der Beleuchtungsvorrichtung anzuordnen.

Mit den beschriebenen Filteranordnungen können auch andere, vom ECE-Weiß abweichende Zielkoordinaten im Farbortdiagramm erreicht werden.

Die Filteranordnungen können auch auf andere Typen von - vorzugsweise keramischen - Konvertern angewandt werden.

Insbesondere ist auch eine Kombination dieser Filteranordnungen mit (Y,Gd)AG-Konvertern sinnvoll, wenn der Gd-Gehalt so niedrig gewählt wird, dass die thermischen Anforderungen an die Lichtquelle noch ohne Einbußen an die Konversionseffizienz erfüllt werden. Dann muss das Emissionsspektrum nur um einen vergleichsweise geringen Grün-Anteil reduziert werden, um den gewünschten Weißpunkt zu erreichen, so dass der Weißpunkt mit geringeren Verlusten und damit mit einer höheren Konversionseffizienz erreicht werden kann, als dies für einen reinen Ce-YAG Konverter der Fall wäre.

## Patentansprüche

1. Beleuchtungsvorrichtung zur Erzeugung von weißem Licht, das für Auto-Scheinwerfer geeignet ist, umfassend:
- eine Halbleiter-Anregungslichtquelle (1) zur Erzeugung von blauem Licht,
- einen Konverter (2), der bei erhöhten Betriebstemperaturen im Bereich von 200°C bis 250°C eine Quanteneffizienz von mehr als 70% aufweist und der die Umwandlung von blauem in gelbes Licht an einem Weißpunkt-nahen Farbort im Farbort-Diagramm ermöglicht, und
- einen Filter (3), der den grünen Lichtanteil unterhalb von 530 nm in dem vom Konverter abgegebenen, Weißpunkt-nahen Licht abschwächt, um im Ergebnis weißes Beleuchtungslicht zu erzielen.

2. Beleuchtungsvorrichtung nach Anspruch 1, wobei der Konverter eine niedrig dotierte, reine Ce-YAG Keramik (2) ist.

3. Beleuchtungsvorrichtung nach Anspruch 1 oder 2, wobei der Konverter (2) auf der Seite zur Anregungslichtquelle (1) hin einen Kurzpassfilter (3) aufweist, der auf der Lichteintrittseite maximale Transmission für blaues Licht aufweist und vom Konverter her rückwärts eintreffendes konvertiertes, kurzwelliges Licht passieren lässt, während das konvertierte, langwellige Licht am Kurzpassfilter (3) weitgehend reflektiert wird, um in einer Transmissionskonfiguration ein resultierendes weißes Emissionsspektrum aus blauem Anregungslicht und aus direkt konvertiertem Anregungslicht sowie nach Reflexion am Kurzpassfilter aus remittiertem Licht zu erhalten.

4. Beleuchtungsvorrichtung nach einem der Ansprüche 1 bis 3, wobei der Konverter (2) 10% bis 30% des Anregungslichts transmittiert, wobei das absorbierte Anregungslicht zu einem großen Teil in gelbes Licht konvertiert wird und wovon der Filter (3) einen grünen Lichtanteil wegfiltert, um in einer Transmissionskonfiguration insgesamt einen Farbton im Weißbereich des Spektraldiagramms zu erzielen.

5. Beleuchtungsvorrichtung nach Anspruch 1 oder 2, wobei der Konverter (2) auf der Seite zur Anregungslichtquelle hin eine selektive Metallspiegelblende (4, 40) aufweist, durch deren Loch (40) das Anregungslicht in den Konverter (2) eintritt, und vom Konverter (2) her rückwärts eintreffendes kurzwelliges Licht selektiv passieren lässt, während das konvertierte, langwellige Licht am selektiven Metallspiegel (4) reflektiert wird, um in einer Transmissionskonfiguration ein resultierendes weißes Emissionsspektrum aus blauem Anregungslicht, direkt konvertiertem Licht der Anregungslichtquelle sowie nach Reflexion am selektiven Metallspiegel (4) aus remittiertem Licht zu erhalten.

6. Beleuchtungsvorrichtung nach Anspruch 1 oder 2, wobei der Konverter (2) auf der Seite zur Anregungslichtquelle hin eine Metallspiegelblende (4, 40) aufweist, durch deren Loch (40) das Anregungslicht in den Konverter (2) eintritt, der 10% bis 30% des Anregungslichts transmittiert, wobei das absorbierte Anregungslicht zu einem großen Teil in gelbes Licht konvertiert wird und wobei auf der Austrittsseite des Beleuchtungslichtes der Filter (3) zur Schwächung des grünen Lichtanteils angeordnet ist, um in einer Transmissionskonfiguration ein resultierendes weißes Emissionsspektrum zu erhalten.

7. Beleuchtungsvorrichtung nach Anspruch 1 oder 2, wobei der Konverter (2) auf der Seite zur Anregungslichtquelle hin einen Bandstoppfilter (3) aufweist, um Anregungslicht hindurchzulassen, jedoch in dem Konverter (2) erzeugtes grünes Licht in den Konverter (2) zurückzureflektieren, und wobei der Konverter (2) auf der von der Anregungslichtquelle abgewandten Seite einen breitbandig reflektierenden Spiegel (4) aufweist, um das auftreffende Licht teilweise der Absorbierung bzw. der Reabsorbierung im Konverter zuzuführen oder dem in Remissionskonfiguration austretenden Beleuchtungslicht (5) hinzuzufügen.

8. Beleuchtungsvorrichtung nach Anspruch 1 oder 2, wobei der Konverter (2) auf der von der Anregungslichtquelle abgewandten Seite einen breitbandig reflektierenden Spiegel (4) aufweist, und wobei der Konverter (2) auf der Seite zur Anregungslichtquelle hin einen Stoppband-Filter (3) aufweist, der bei der blauen Anregungswellenlänge und bei längeren, gelb-roten Emissionswellenlängen reflexmindernd wirkt und damit die Auskopplung von Licht aus dem Konverter (2) relativ zu den mittleren, grün-gelben Spektralanteilen in der Remissionskonfiguration begünstigt.

9. Beleuchtungsvorrichtung nach Anspruch 1 oder 2, wobei der Konverter (2) auf der von der Anregungslichtquelle abgewandten Seite einen Filter (3) aufweist, der mittels eines wärmeleitfähigen Klebers oder mittels eines Lotes (9) mit einer plattenförmigen Wärmesenke (10) verbunden ist und zusammen mit diesen Elementen einen effektiven Spiegel ergibt, so dass das in dem Konverter (2) erzeugte langwellige Licht weitgehend reflektiert wird, während kurzwelliges, grünes Licht durch den Filter (3) zur Absorption in dem wärmeleitfähigen Kleber oder in das Lot (9) austritt, wodurch das in einer Remissionskonfiguration austretende Licht insgesamt einen Farbort im Weißbereich des Spektraldiagramms einnimmt.

10. Beleuchtungsvorrichtung nach Anspruch 1 oder 2, wobei der Filter (3) ein dichroitischer Reflektorspiegel mit einem Grünpass im Bereich von 480 bis 530 nm ist, der den Grünanteil des vom Konverter (2) abgegebenen Lichtes abreichert.

## Claims

1. An illumination device for generating white light that is suitable for car headlamps, comprising:
- a semiconductor excitation light source (1) for generating blue light;
- a converter (2) which exhibits a quantum efficiency of more than 70 % at elevated operating temperatures in the range from 200 °C to 250 °C, and which allows conversion from blue into yellow light at a color location near the white point in the chromaticity diagram; and
- a filter (3) which attenuates the green light component below 530 nm in the near-white point light emitted by the converter so as to obtain white illumination light as a result.

2. The illumination device according to claim 1, wherein the converter is a low-doped pure Ce:YAG ceramic (2).

3. The illumination device according to claim 1 or 2, wherein the converter (2) has a short-pass filter (3) on its side facing the excitation light source (1), which exhibits maximum transmittance for blue light on the light entrance side and passes converted short-wavelength light arriving at the rear side from the converter, while the converted long-wavelength light is largely reflected at the short-pass filter (3), so as to obtain, in a transmission configuration, a resultant white emission spectrum from blue excitation light and directly converted excitation light and from remitted light after reflection at the short-pass filter.

4. The illumination device according to any of claims 1 to 3, wherein the converter (2) transmits from 10 % to 30 % of the excitation light, wherein the absorbed excitation light is converted into yellow light to a great extent, and of which the filter (3) filters out a green light component so as to obtain, in total, a hue in the white region of the chromaticity diagram, in a transmission configuration.

5. The illumination device according to claim 1 or 2, wherein the converter (2) has a selective metallic mirror diaphragm (4, 40) on its side facing the excitation light source, with an aperture (40) through which the excitation light enters the converter (2), and which selectively passes short-wavelength light arriving at the rear side from the converter, while converted long-wavelength light is reflected at the selective metallic mirror (4) so as to obtain, in a transmission configuration, a resultant white emission spectrum from blue excitation light, directly converted light from the excitation light source, and remitted light after reflection at the selective metallic mirror (4).

6. The illumination device according to claim 1 or 2, wherein the converter (2) has a metallic mirror diaphragm (4, 40) on its side facing the excitation light source, with an aperture (40) through which the excitation light enters the converter (2) which transmits from 10 % to 30 % of the excitation light, wherein the absorbed excitation light is converted into yellow light to a great extent, and wherein the filter (3) for attenuating the green light component is disposed at the exit side of the illumination light so as to obtain, in a transmission configuration, a resulting white emission spectrum.

7. The illumination device according to claim 1 or 2, wherein the converter (2) has a band-stop filter (3) on its side facing the excitation light source for transmitting the excitation light but for reflecting back into the converter (2) green light produced in the converter (2), and wherein the converter (2) has a broadband reflective mirror (4) on its side facing away from the excitation light source for supplying part of the incident light to absorption or re-absorption in the converter, or to combine it with the illumination light (5) exiting in a remission configuration.

8. The illumination device according to claim 1 or 2, wherein the converter (2) has a broadband reflective mirror (4) at its side facing away from the excitation light source, and wherein the converter (2) has a band stop filter (3) on the side facing the excitation light source, which has an anti-reflective effect for the blue excitation wavelength and for longer, yellow-red emission wavelengths and therefore promotes emission of light from the converter (2) relative to the central green-yellow spectral components, in a remission configuration.

9. The illumination device according to claim 1 or 2, wherein the converter (2) has a filter (3) on its side facing away from the excitation light source, which filter is bonded to a plate-shaped heat sink (10) by means of a heat conductive adhesive or by means of solder (9) and together with these elements forms a mirror effective so that the long-wavelength light generated in the converter (2) is mostly reflected, while short-wavelength green light is exiting through the filter (3) into the heat conductive adhesive or into the solder (9) for being absorbed, whereby the light exiting in a remission configuration in total occupies a color location in the white region of the chromaticity diagram.

10. The illumination device according to claim 1 or 2, wherein the filter (3) is a dichroic reflective mirror with a green pass-band in a range from 480 to 530 nm, which depletes the green component of the light emitted from the converter (2).

## Revendications

1. Dispositif d'éclairage destiné à produire une lumière blanche, qui est adaptée à des projecteurs de véhicule automobile, comprenant :
- une source de lumière d'excitation à semiconducteurs (1) destinée à produire une lumière bleue,
- un convertisseur (2), qui, dans le cas de températures de fonctionnement élevées dans la plage de 200°C à 250°C, présente un rendement quantique supérieur à 70 % et qui permet la conversion d'une lumière bleue en lumière jaune en une localisation chromatique proche du point blanc dans le diagramme de localisations chromatiques, et
- un filtre (3), qui atténue la fraction de lumière verte inférieure à 530 nm dans la lumière émise par le convertisseur et proche du point blanc, afin d'obtenir par conséquent une lumière d'éclairage blanche.

2. Dispositif d'éclairage selon la revendication 1, dans lequel le convertisseur est une céramique (2) pure, faiblement dopée, de Ce-YAG.

3. Dispositif d'éclairage selon la revendication 1 ou 2, dans lequel le convertisseur (2) comprend, sur le côté tourné vers la source de lumière d'excitation (1), un filtre passe-bas (3) qui présente sur le côté d'entrée de lumière une transmission maximale de la lumière bleue et qui laisse passer une lumière de faible longueur d'onde convertie incidente vers l'arrière à partir du convertisseur, tandis que la lumière convertie de grande longueur d'onde est réfléchie en grande partie sur le filtre passe-bas (3), afin d'obtenir, dans une configuration de transmission, un spectre d'émission blanc résultant composé d'une lumière d'excitation bleue et d'une lumière d'excitation directement convertie ainsi que, après réflexion sur le filtre passe-bas, d'une lumière réémise.

4. Dispositif d'éclairage selon l'une quelconque des revendications 1 à 3, dans lequel le convertisseur (2) transmet 10 % à 30 % de la lumière d'excitation, la lumière d'excitation absorbée étant convertie en grande partie en lumière jaune et le filtre (3) éliminant par filtrage une fraction de lumière verte, afin d'obtenir dans l'ensemble, dans une configuration de transmission, une nuance dans le domaine blanc du diagramme spectral.

5. Dispositif d'éclairage selon la revendication 1 ou 2, dans lequel le convertisseur (2) comprend, sur le côté tourné vers la source de lumière d'excitation, un diaphragme de miroir métallique (4, 40) sélectif, par le trou (40) duquel la lumière d'excitation pénètre dans le convertisseur (2), et laisse passer sélectivement la lumière de faible longueur d'onde incidente vers l'arrière depuis le convertisseur (2), tandis que la lumière de grande longueur d'onde convertie est réfléchie sur le miroir métallique sélectif (4), afin d'obtenir, dans une configuration de transmission, un spectre d'émission blanc résultant composé d'une lumière d'excitation bleue, d'une lumière directement convertie de la source de lumière d'excitation ainsi que, après réflexion sur le miroir métallique sélectif (4), d'une lumière réémise.

6. Dispositif d'éclairage selon la revendication 1 ou 2, dans lequel le convertisseur (2) comprend, sur le côté tourné vers la source de lumière d'excitation, un diaphragme de miroir métallique (4, 40) par le trou (40) duquel la lumière d'excitation pénètre dans le convertisseur (2), qui transmet 10 % à 30 % de la lumière d'excitation, la lumière d'excitation absorbée étant convertie en grande partie en lumière jaune et le filtre (3) destiné à atténuer la fraction de lumière verte étant agencé sur le côté de sortie de la lumière d'excitation, afin d'obtenir, dans une configuration de transmission, un spectre d'émission blanc résultant.

7. Dispositif d'éclairage selon la revendication 1 ou 2, dans lequel le convertisseur (2) comprend, sur le côté tourné vers la source de lumière d'excitation, un filtre passe-bande (3), afin de laisser passer la lumière d'excitation, mais de réfléchir dans le convertisseur (2) la lumière verte produite dans le convertisseur (2), et dans lequel le convertisseur (2) présente, sur le côté opposé à la source de lumière d'excitation, un miroir réfléchissant (4) à large bande, afin d'amener la lumière incidente en partie de l'absorption ou de la réabsorption dans le convertisseur ou de l'ajouter à la lumière d'éclairage (5) sortant dans la configuration de réémission.

8. Dispositif d'éclairage selon la revendication 1 ou 2, dans lequel le convertisseur (2) comprend, sur le côté opposé à la source de lumière d'excitation, un miroir réfléchissant (4) à large bande, et dans lequel le convertisseur (2) comprend, sur le côté tourné vers la source de lumière d'excitation, un filtre passe-bande (3), qui, dans le cas d'une longueur d'onde d'excitation bleue et dans le cas de longueurs d'onde d'émission jaunes-rouges plus longues, a un effet antireflet et favorise donc l'extraction de la lumière du convertisseur (2) par rapport aux fractions spectrales vertes-jaunes moyennes dans la configuration de réémission.

9. Dispositif d'éclairage selon la revendication 1 ou 2, dans lequel le convertisseur (2) comprend, sur le côté opposé à la source de lumière d'excitation, un filtre (3) qui est relié à un dissipateur thermique (10) en forme de plaque au moyen d'un adhésif thermo-conducteur ou au moyen d'une soudure (9) et qui produit conjointement avec ces éléments un miroir efficace, de sorte que la lumière de grande longueur d'onde produite dans le convertisseur (2) est réfléchie en grande partie, tandis que la lumière verte de faible longueur d'onde sort par le filtre (3) pour être absorbée dans la colle thermoconductrice ou dans la soudure (9), de sorte que la lumière sortant dans une configuration de réémission occupe dans l'ensemble une localisation chromatique dans le domaine blanc du diagramme spectral.

10. Dispositif d'éclairage selon la revendication 1 ou 2, dans lequel le filtre (3) est un miroir réfléchissant dichroïque présentant un passage de vert dans la plage de 480 à 530 nm, qui dégrade la fraction de la lumière émise par le convertisseur (2).
